# EUROPEAN PATENT APPLICATION

(11) **EP 1 672 021 A1**
(43) Date of publication of application: **21.06.2006**
(21) Application number: 04078422.5
(22) Date of filing: 16.12.2004
(51) Int. Cl.: C08L 23/10

(54) **Polypropylene compositions**

(71) Applicant: Saudi Basic Industries Corporation, Riyadh 11422 (SA)
(72) Inventor: Essers, Franciscus Elisabeth Jacobus, 6126 EN Maastricht (NL); Neuteboom, Peter, 6432 DJ Hoensbroek (NL)
(74) Representative: Krijgsman, Willem

(57) **Abstract**

Polypropylene composition comprising:
(i) 30-95 wt.% of a polypropylene (PP);
(ii) 2-25 wt.% of a linear low density polyethylene (LLDPE) copolymer of ethylene and 1-butylene with a density between 0.890 and 0.930 g/cm³, and a Melt Flow Index (MFI) between 0.1 and 100 g/10min
(iii) 3-40 wt.% of a copolymer of ethylene and a C₃-C₂₀ α-olefin with a density between 0.840 and 0.890g/cm³ and a MFI between 0.1 and 100 g/10min, and
(iv) 0-60 wt.% of a filler,
wherein all wt.% are calculated with respect to the total amount (i), (ii), (iii) and (iv) and the ratio of the amount of LLDPE to the amount of the copolymer of ethylene and a C₃₋C₂₀ α-olefin is less than 1.2.

## Description

The invention relates to a polypropylene composition comprising
(i) 30-95 wt.% of a polypropylene (PP);
(ii) 2-25 wt.% of a linear low density polyethylene (LLDPE) copolymer of ethylene and 1-butylene with a density between 0.890 and 0.930 g/cm³, and a Melt Flow Index (MFI) between 0.1 and 100 g/10min;
(iii) 3-40 wt.% of a copolymer of ethylene and a C₃-C₂₀ α-olefin with a density between 0.840 and 0.890g/cm³ and a MFI between 0.1 and 100 g/10min; and
(iv) 0-60 wt.% of a filler,
wherein all wt.% are calculated with respect to the total amount (i), (ii), (iii) and (iv) and the ratio of the amount of LLDPE to the amount of the copolymer of ethylene and a C₃₋C₂₀ α-olefin is less than 1.2.

It is well known to use a copolymer of ethylene and a C₃-C₂₀ α-olefin in order to enhance the impact resistance of the polypropylene composition. It is for instance described in WO-A-01/42352, wherein polypropylene compositions are disclosed of polypropylene and substantially linear polyethylene, particularly substantially linear polyethylene prepared by using a metallocene based catalyst. A disadvantage of these compositions is that in order to achieve a certain impact resistance, a rather large amount of the copolymer of ethylene and a C₃-C₂₀ α-olefin is to be used. This is especially disadvantageous as such copolymers of ethylene and a C₃-C₂₀ α-olefin, are rather expensive.

Applicant now surprisingly found that in the known compositions containing more than 5 wt.% of the copolymer of ethylene and a C₃-C₂₀ α-olefin (iii), part of the copolymer of ethylene and a C₃-C₂₀ α-olefin can be replaced by a LLDPE, without negatively influencing the impact resistance. Amounts of LLDPE up to 1.2 times the amount of the copolymer of ethylene and a C₃-C₂₀ α-olefin can be applied. Preferably the amount of LLDPE is 25-50 wt.% calculated with respect to the total amount of LLDPE and the copolymer of ethylene and a C₃-C₂₀ α-olefin.

Unless specifically indicated otherwise, all wt.% are calculated with respect to the total amount of PP, LLDPE, copolymer of ethylene and a C₃-C₂₀ α-olefin and filler.

The composition according to the invention contains 30-95 wt.%, preferably 60- 80 wt.% PP. The type of PP to be used in the composition according to the invention is not very critical. Homo as well as copolymers, particularly all kinds of reactor copolymers, for instance block copolymers (blends of homopolymers and a rubber, for instance an EPR rubber) may be used. Many types of PP are commercially available. They can be readily prepared by methods well known and extensively described in the art using for instance conventional Ziegler-Natta catalysts as well as single site catalysts, for instance metallocene catalysts. Of course, also mixtures of different types of PP can be used.

The MFI of the PP, measured in accordance with ISO 1133 using a 2.16 kg weight and at a temperature of 230°C, may vary between wide limits, for instance between a lower limit of 0.1 and an upper limit of 100 g/10min. Preferably the lower limit is 10, most preferably 20 g/10min.

The polypropylene homopolymer preferably has an isotactic structure, which means that the isotacticity is high, for instance more than 95%, preferably more than 98%. Preferably a copolymer of propylene and of an olefin other than polypropylene is used. Olefins other than propylene that can be used are for instance α-olefins, in particular 1-alkenes having for instance 2 or 4-20 C-atoms or cyclic olefins, optionally containing more than one ring, having a double bond in the ring structure. Of course also more than one olefin can be used. Examples of such olefins are ethylene, butene, hexene, styrene, cyclopentene and norbornadiene. Preferably the α-olefin is a 1-alkene having 2 or 4-8 C-atoms; particularly preferred is ethylene.

In order to enlarge the impact resistance the PP preferably contains some rubber, for instance, 0-30 wt.% of a rubber, preferably 5-20 wt.%, with a comonomer content of, for instance 10 -70 wt.%, preferably 30 -65 wt.%. The rubber preferably is an EPR rubber (ethylene propylene rubber). The EPR rubber preferably has an ethylene content of 20 -70%, more preferably of 50 -65 wt.%.

The PP may also contain modified polypropylene. Modified polypropylenes are well known in the art. Modified propylenes are normally polypropylenes grafted with for instance an unsaturated organic compound, for instance a carboxylic acid, an anhydride, an ester, or salts thereof or maleic, fumaric, (meth)acrylic, itaconic or cinnamic acid or anhydride, ester or salt thereof. Preferably maleic anhydride is used. The amount of modified polypropylene in the PP can vary within wide limits. For economical reasons the amount normally will be rather low, for instance lower than 10 wt.%, preferably 0-3 wt.% modified polypropylene calculated with respect to the total amount of PP.

The compositions according to the invention contain 0-30 wt.% of a copolymer of ethylene and a C₃-C₂₀ α-olefin. The copolymer of ethylene and a C₃-C₂₀ α-olefin to be used in the composition according to the invention has a density between 0.840 and 0.890 g/cm³, preferably between 0.860 and 0.880 g/cm³. Most preferably the density is lower than 0.870 g/cm³. The Melt Flow Index measured in accordance with ISO 1133 using a 2.16 kg weight and at a temperature of 190°C is between 0.1 and 100 g/10min, preferably between 0.1 and 50 g/10min. Such copolymers are commercially available and can be readily obtained using processes that are well known in the art.

Preferably the polypropylene composition according to the invention comprises 5-25 wt.%, more preferably 6-20 wt.%, most preferably 8-20 wt.% of the copolymer of ethylene and a C₃-C₂₀ α-olefin. Such compositions show a high scratch resistance combined with a high impact resistance.

The composition according to the invention contains 2-25 wt.%, preferably 2-20 wt.% LLDPE and is chosen such that the ratio of the amount of LLDPE to the amount of the copolymer of ethylene and a C₃-C₂₀ α-olefin is lower than or equal to 1.2, preferably lower than or equal to1. The amount of LLDPE preferably is chosen such that the ratio of the amount of LLDPE to the amount of the copolymer of ethylene and a C₃-C₂₀ α-olefin is larger than 0.3, more preferably larger than 0.6. If the content of the copolymer of ethylene and a C₃-C₂₀ α-olefin is relatively low, for instance lower than 8 wt.%, particularly lower than 6 wt.%, the amount of LLDPE preferably is chosen such that the ratio of the amount of LLDPE to the amount of the copolymer of ethylene and a C₃-C₂₀ α-olefin is between 0.3 and 0.8, preferably between 0.4 and 0.7.

Linear low density polyethylenes (LLDPE) are well known in the art. They are commercially available and can be readily obtained using processes that are well known in the art. The LLDPE to be used in the composition of the present invention is a random copolymer of ethylene with 1-butylene having a density between 0.890 and 0.930 g/cm³, preferably between 0.910 and 0.920 g/cm³, and a Melt Flow Index (MFI) between 0.1 and 100 g/10min. The MFI can be chosen in accordance with the desired properties of the composition. For a number of applications an LLDPE with a MFI between 1 and 50 g/10min will be chosen, more particularly with an MFI between 2 and 30 g/10min.

Fillers to be used in the composition of the present invention are, for instance mineral fillers, in particular talc, glass beads, glass fibers, clay, mica, wollastonite, silica, carbon black, titanium oxide, or combinations thereof. The amount of filler in the polypropylene composition according to the invention is between 0 and 60 wt.%. The higher part of the range of fillers will normally be present in mixtures of a homopolymer of PP and filler or in concentrates (i.e. compositions that normally will be mixed with other compositions before being further processed, for instance moulded). Compositions used for further processing into articles, for instance by blow moulding, injection moulding, extrusion, or extrusion compression moulding, preferably contain for instance more than 0, particularly more than 1, most preferably more than 5 wt.% filler and less than 45 wt.%, particularly less than 30, most preferably less than 20 wt.% filler.

The compositions according to the invention may of course also contain in addition one or more other polymers. Suitable examples of such additional polymers are thermoplastic polyolefins, for instance high density polyethylenes (HDPE) and low density polyethylenes (LDPE).

The propylene copolymer compositions according to the invention can suitably be used for instance in blow moulding, injection moulding or extrusion of mouldings, films, sheets or pipes to be applied in a wide range of uses, for instance, exterior and interior automotive parts like bumper beams, bumper fascia, instrument panels and pillars, thin wall packaging, caps and closures, pails and containers, crates and boxes, cans and bottles, appliance housings, houseware, toys, multi-media packaging, electrical applications, like electrical equipment housing, lawn and garden furniture, construction sheet etc.

The composition according to the invention may optionally contain additives, for instance nucleating agents and clarifiers, stabilizers, release agents, slip agents, fillers, plasticizers, anti-oxidants, colorants, ignition resistant additives, lubricants, mold releases, flow enhancers, antistatics and the like. Such additives are well known in the art. The skilled person will choose the type and amount of additives such that they do not detrimentally influence the aimed properties of the composition. The amount of additives may vary between wide limits, for instance from 0 up to 20 wt.%, particularly between 1 and 10 wt.%, calculated with respect to the polypropylene composition.

The preparation of the compositions according to the invention may be performed according to any suitable mixing procedure. Such procedures are well known in the art. One example of a preparation method is dry blending the individual components, optionally followed by melt mixing, and subsequently extrusion or directly injection moulding.

The invention now will be elucidated by the following examples without, however, being restricted thereto.

The compositions are made by compounding all ingredients at 210 °C in a co-rotating twin-screw extruder. The composition is then injection moulded into plates of 65 x 65 x 3.2 mm according to ISO 37-2.

The appropriate samples are machined out of the plates.

### Example I

The ingredients used are SABIC Polypropylene copolymer (density = 0.905 g/cm³; MFI = 27 g/10min; E-modulus = 1200 N/mm²); copolymer Engage® 8200; Talc Steamic® OOS D; SABIC LLDPE (density 0.918 g/cm³; MFI = 3 g/10min); additives and colour master batch. The additives and colour master batch consist of 0.1 wt.% Irganox B225 and 2 wt.% colour master batch containing 40 wt.% pigment.

The composition and the properties of the composition are given in table 1 (Sample I). The amounts used are given in wt.% calculated with respect of the total composition.

### Comparative Example A

The ingredients used are the same as used in Example 11; no LLDPE is used.

The composition and the properties of the composition are given in table 1 (Sample A). The amounts used are given in wt.% calculated with respect of the total composition.

**Table 1**

| Composition | | Sample A | Sample I |
|---|---|---|---|
| Polypropylene | wt.% | 67.9 | 67.9 |
| | | | |
| Copolymer | wt.% | 18 | 9 |
| Filler | wt.% | 12 | 12 |
| LLDPE | wt.% | | 9 |
| Additives and colour master batch | wt.% | 2.1 | 2.1 |
| | | | |
| MFI (ISO 1133) | dg/min | 19 | 18 |
| Izod notched impact @ 0°C perpendicular (ISO 180A) | kJ/m2 | 37 | 37 |
| E-modulus parallel (ASTM D790) | N/mm2 | 1300 | 1350 |
| Shrink (ISO 204 3&4) | % | 0.73 | 0.78 |

### Example II

The ingredients used are SABIC Polypropylene copolymer (density = 0.905 g/cm³; MFI = 30 g/10min; E-modulus = 1400N/mm²); copolymer Engage 8200; Talc Steamic® OOS D; SABIC LLDPE (density 0.918 g/cm³; MFI = 3 g/10min); additives and colour master batch. The additives and colour masterbatch consist of 0.1 % Irganox B225 and 2% colourmasterbatch containing 40% pigment.

The composition and the properties of the composition are given in table 2 (Sample II). The amounts used are given in wt.% calculated with respect of the total composition.

### Comparative Example B

The ingredients used are the same as used in Example II; no LLDPE is used.

The composition and the properties of the composition are given in table 2 (Sample B). The amounts used are given in wt.% calculated with respect of the total composition.

| Composition | | Sample B | Sample II |
|---|---|---|---|
| Polypropylene | wt.% | 77.9 | 77.9 |
| Copolymer | wt.% | 8 | 6 |
| Filler | wt.% | 12 | 12 |
| LLDPE | wt.% | | 2 |
| Additives and colour master batch | wt.% | 2.1 | 2.1 |
| | | | |
| MFI ISO 1133 | dg/min | 23 | 22 |
| Izod notched impact @ 0°C perpendicular (ISO 180A) | kJ/m2 | 19 | 18 |
| E-modulus parallel (ASTM D790) | N/mm2 | 1610 | 1630 |
| Shrink (ISO 204 3&4) | % | 0.89 | 0.91 |

The examples show that part of the copolymer can be replaced by LLDPE while the properties remain unaffected.

## Claims

1. Polypropylene composition comprising:
(i) 30-95 wt.% of a polypropylene (PP);
(ii) 2-25 wt.% of a linear low density polyethylene (LLDPE) copolymer of ethylene and 1-butylene with a density between 0.890 and 0.930 g/cm³, and a Melt Flow Index (MFI) between 0.1 and 100 g/10min
(iii) 3-40 wt.% of a copolymer of ethylene and a C₃-C₂₀ α-olefin with a density between 0.840 and 0.890g/cm³ and a MFI between 0.1 and 100 g/10min, and
(iv) 0-60 wt.% of a filler,
wherein all wt.% are calculated with respect to the total amount (i), (ii), (iii) and (iv) and the ratio of the amount of LLDPE to the amount of the copolymer of ethylene and a C₃-C₂₀ α-olefin is less than 1.2.

2. Composition according to claim 1, wherein the amount of LLDPE is 25-50 wt.% calculated with respect to the total amount of LLDPE and the copolymer of ethylene and a C₃-C₂₀ α-olefin.

3. Composition according to claim 1 or 2, wherein the amount of LLDPE is 2-20 wt. %.

4. Composition according to any one of claims 1-3, wherein the density of the LLDPE is between 0.910 and 0.920 g/cm³.

5. Composition according to any one of claims 1-4, wherein the LLDPE has an MFI between 1 and 50 g/10min, preferably between 2 and 30 g/10min.

6. Composition according to any one of claims 1-5, wherein the amount of the copolymer of ethylene and a C₃-C₂₀ α-olefin is between 5 and 25 wt.%, preferably between 6 and 20 wt.%.

7. Composition according to any one of claims 1-6, wherein the copolymer of ethylene and a C₃-C₂₀ α-olefin has a density between 0.860 and 0.880 g/cm³.

8. Composition according to any one of claims 1-7, wherein the copolymer of ethylene and a C₃-C₂₀ α-olefin has a density lower than 0.870 g/cm³.

9. Composition according to any one of claims 1-8, wherein the MFI of the copolymer of ethylene and a C₃-C₂₀ α-olefin is between 0.1 and 50 g/10min.

10. Composition according to any one of claims 1-9, wherein the amount of PP is between 60 and 80 wt.%.

11. Composition according to any one of claims 1-10, wherein the PP contains 0-30 wt.%, preferably 5-20 wt.% of a rubber.

12. Composition according to claim 11, wherein the comonomer content of the rubber is 10-70 wt.%, preferably 30-65 wt.%.

13. Composition according to claim 11 or 12, wherein the rubber is an ethylene propylene rubber (EPR).

14. Composition according to claim 13, wherein the EPR has a comonomer content of 20-70 wt.%, preferably 50-65 wt.%.

15. Composition according to any one of claims 1-14, wherein the amount of filler is 1-45 wt.%, preferably 2-20 wt.%.

16. Article made of a composition according to claim 15.
